# EUROPEAN PATENT SPECIFICATION

(11) **EP 1 369 390 B1**
(45) Date of publication and mention of the grant of the patent: **23.12.2009**
(21) Application number: 03076689.3
(22) Date of filing: 02.06.2003
(51) Int. Cl.: C03B 23/11, C03B 23/08, C03B 23/18

(54) **Machine for the continuous forming of glass vials or containers comprising a centring device for the semi-finished glass vial**
Maschine zur kontinuierlichen Herstellung von Glasampullen oder Behältern mit einer Vorrichtung zum Zentrieren der halbfertigen Glasampullen
Machine pour la formation en continu d'ampoules en verre ou d'articles de verre creux comprenant un dispositif de centrage de l'ampoule semi-finie

(30) Priority: 03.06.2002 IT MI20021196
(43) Date of publication of application: 10.12.2003
(73) Proprietor: Euromatic s.r.l., 24047 Treviglio (Bergamo) (IT)
(72) Inventor: Vaporesi, Donino, 24047 Treviglio (Bergamo) (IT)
(74) Representative: De Gregori, Antonella

(56) References cited:
- US-A- 1 489 837
- US-A- 3 424 570

## Description

The present invention relates to a centring device for a semi-finished glass vial in a machine for the continuous forming of glass vials or containers.

In the industry utilizing machines that produce glass containers, such as glass vials and the like for pharmaceutical or similar use, finished vials ready to be treated and filled with a medicinal product or the like must have extremely limited tolerances. This is due to the fact that these vials must be produced to a precise size and must be perfectly level and centred axially to facilitate as much as possible their treatment and filling in automatic packaging machines.

These known machines are generally constituted by a carousel structure of a rotary plate which carries a certain number of supporting elements for the same number of glass tubes to be transformed into vials equipped with bottoms and open at a shaped mouth.

This rotary plate of the carousel structure and intermittent movement, provided with the supporting elements, is rotated to a certain number of fixed stations of the load-bearing structure where, in successive phases, shaping of the mouth end of each of the vials is performed.

In fact the carousel structure, as well as having in association a certain number of heaters which, acting on the free ends of the glass tubes, allow them to be processed during the steps of the movement, is also provided with shaping stations.

It is natural that the stepped rotary movement of the rotary plate prolongs the processing times of the glass tubes. An increase in the rotation speed would cause operations at the various stations to be slightly off target with shaping of the mouth that may not be level and may not be axially aligned.

Consequently, it is easy to understand that the productivity of these prior art machines is limited owing to the low speed that must be maintained during the processing phases.

Document US5252115 discloses a vial machine in which from many glass tubes in a cycle, step by step vials are produced by rolling and melting the tube pieces, wherein the vial machine comprises forming fingers for forming a mouth area on the glass vials allocated either to each glass tube, or provided with play, or provided with lateral recesses. Document US3227539 describes a machine for forming objects from glass tubing, the tubing being vertically held in a stepped rotating holder, wherein the machine has means for centering the tube which comprise a plurality of shaping members and means for moving said members into engagement with the tube, a plurality of centering rollers including supporting arms and stop means for limiting movement of the centering roller arms.

This is all necessary to prevent a container with a small diameter, such as a vial or the like, from not being perfectly centred in relation to its axis and from not having a perfectly symmetrical form.

The object of the present invention is therefore to produce a device that maintains correct centring of a semi-finished glass vial in a machine for forming glass vials or similar containers which rotates in steps at a certain speed, more precise than those currently attainable.

Another general object of the present invention is to solve the aforesaid technical problems, although with a very simple structure that is adaptable to the different machines for forming glass vials or containers.

Yet another object of the present invention is to produce a device that allows quick and assured centring of a semi-finished glass vial in a station of a machine for the continuous forming of glass vials.

A further and not last object of the present invention is to produce a centring device in a machine for forming glass vials which allows greater precision in relation to prior art machines.

These general objects according to the present invention are attained by producing a machine for the continuous forming of glass vials or similar containers of the same size as set forth in claim 1.

Further characteristics are provided in the dependent claims.

The characteristics and advantages of a centring device for a semi-finished glass vial in a machine for the continuous forming of glass vials or similar containers of the same size according to the present invention shall become more apparent from the nonlimiting exemplificative description hereunder, with reference to the attached schematic drawings in which:
figure 1 is a top plan view of a centring device for a semi-finished glass vial according to the present invention in a machine for the continuous forming of glass vials or similar containers of the same size,
figure 2 is a side elevation which shows a portion of the first carousel of the machine in figure 1 with the device of the present invention in a first position,
figure 3 is a similar view to the one in figure 2 of the device of the present invention in a second position,

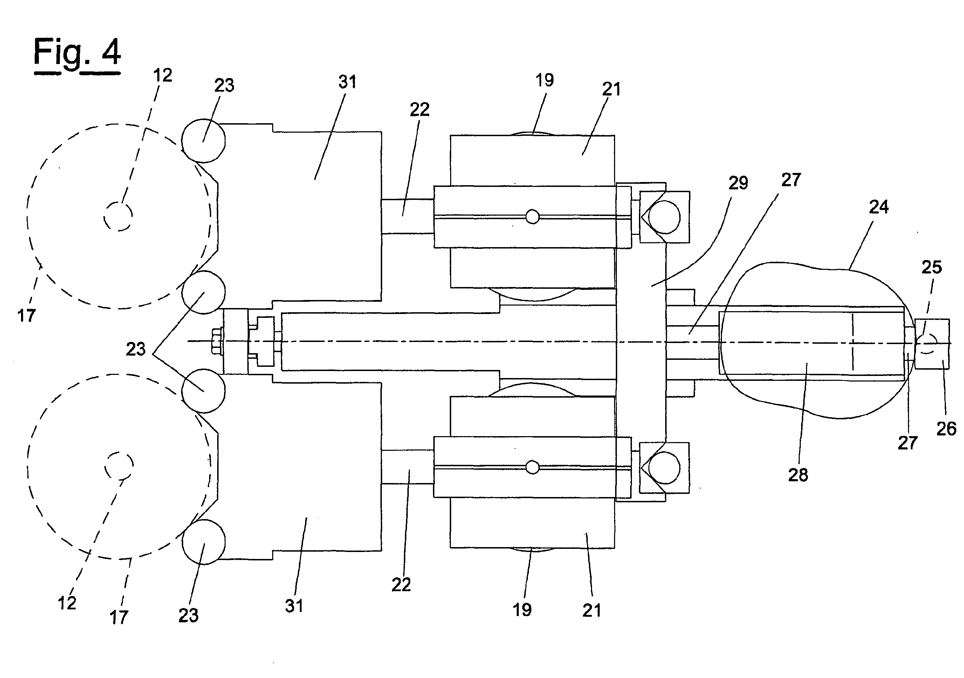

figure 4 is an enlarged top plan view only of the device of the invention.

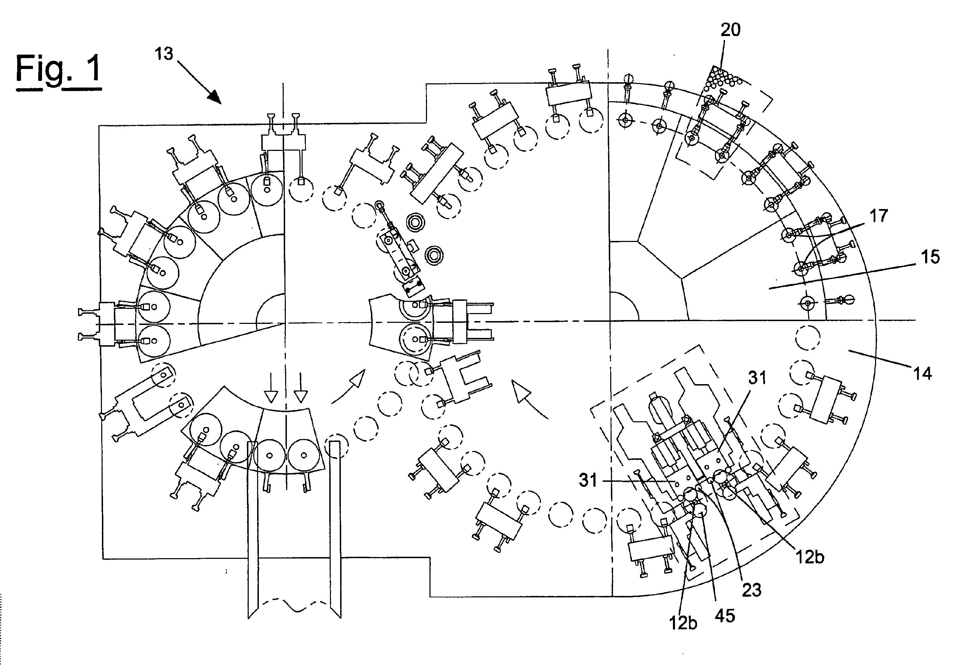

With reference to figure 1, this shows, at least in part and schematically, a shaping station, indicated as a whole with 11, for the shaped mouth of a glass tube 12 in a machine for the continuous forming of glass vials or similar containers of the same size, shown schematically with 13.

It must be taken into account that in general a machine 13 of this type essentially comprises a rotary carousel constituted by a lower load-bearing fixed structure 14 on which an upper plate 15 is disposed rotating around a central shaft 16.

The rotary plate 15 carries a plurality of supporting elements 17 for glass tubes 12, disposed according to a circumference around the periphery of the rotary plate 15, which in the example are disposed in pairs and are spaced at a pre-established distance along the circumference. It is from these glass tubes 12 that during processing portions of semi-finished glass tube are individuated to produce the single vial or similar container (not shown).

Each supporting element 17 is equipped with an underlying gripping element 18, of known type, which allows the glass tube 12 passing through it to be held in the desired position. In fact, the glass tubes 12 are fed inside the supporting element 17 so that their lower end 12a projects downwards below the supporting element 17. This lower end 12a projects as a function of the size of the vial to be obtained, that is of the desired and preselected dimension. It is on this lower end 12a that a shaped mouth 12b is produced to allow positioning of a closing cover on the vial once it is finished and filled (not shown).

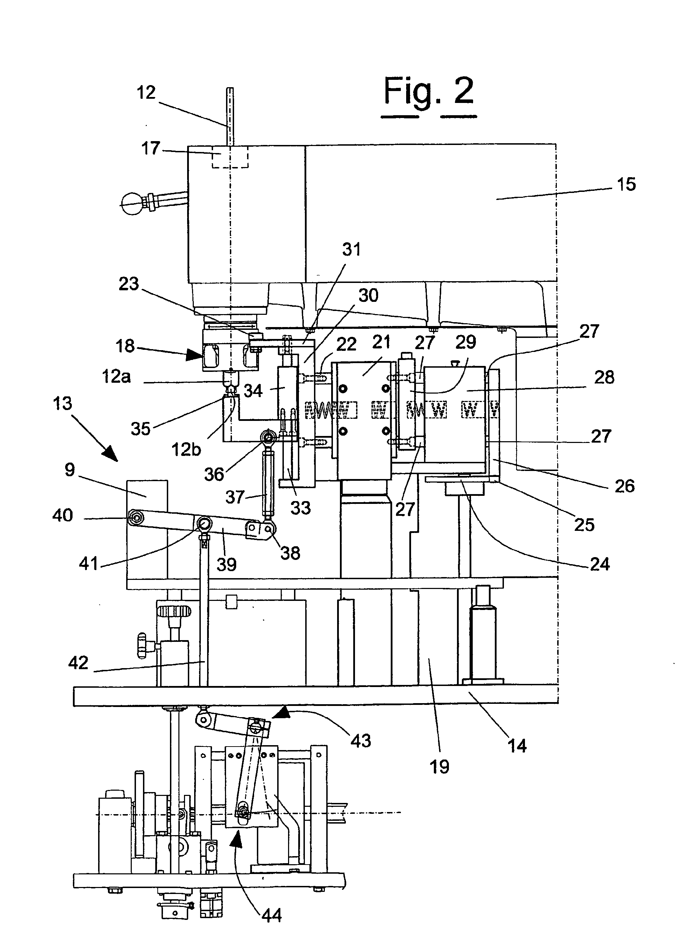

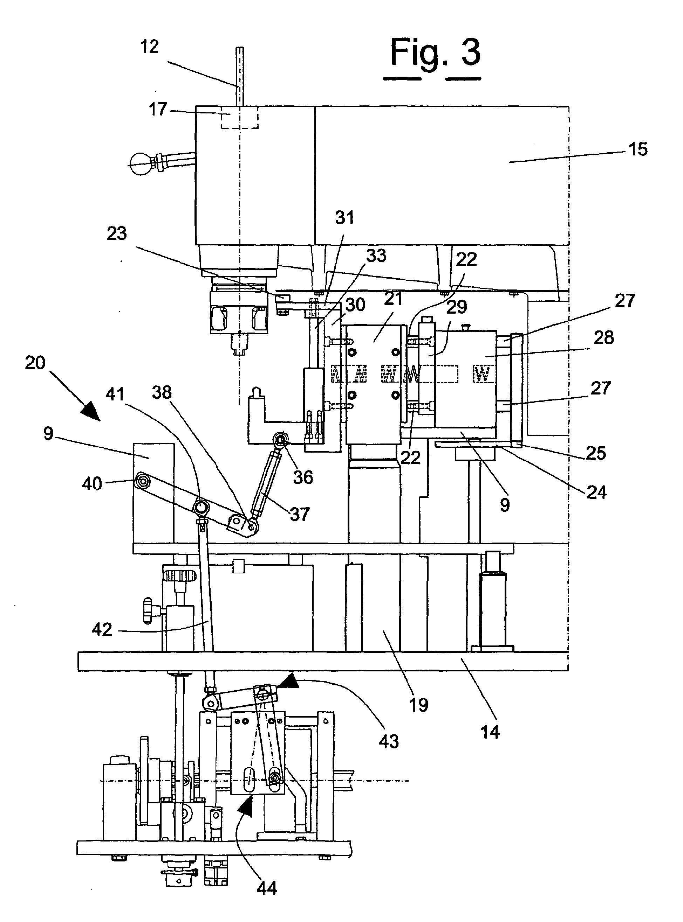

The shaping station 11 of the shaped mouth of the glass tube has a pair of uprights 19 on which a centring device according to the present invention is disposed, shown in detail in figures 2 and 3 and indicated with 20.

The centring device 20 essentially comprises stable positioning elements of the supporting elements 17 disposed on the rotary plate 15 and centring pins of the free lower end 12a of each glass tube 12.

In particular, each upright 19 carries a pair of prismatic load-bearing bodies 21 inside which pairs of rods 22 are guided slidingly, superimposed and spaced apart, which projectingly carry pairs of support rollers 23 on each of the supporting elements 17 of the rotary plate 15.

More precisely, each prismatic body 21 has two through holes (not shown) to house slidingly forwards and backwards the two rods 22. The forward and backward movement is imparted by a control cam 24 which, operated in rotation, acts on a wheel 25 disposed at one end of a head 26. This head 26 is connected via two further rods 27 which pass and slide inside holes (not shown) of a prismatic body 28 carried by a fixed structure 9 of the device. At the ends the two rods 27 are connected centrally to a crosspiece 29 to which the free ends of the two pairs of rods 22 described previously are connected.

The opposite ends of each pair of two rods 22 are connected to two further vertical supports 30 which each carry at the top a bracket 31 to which the two guide and support rollers 23 of a respective rotary supporting element 17 are revolvingly connected free to rotate. The rollers are placed at opposite ends of the bracket 31 facing the supporting element 17.

Between each vertical support 30 and the respective prismatic body 21 at least one elastic element in the form of a spring 32 is disposed to maintain, in the position at rest, the vertical support 30, the bracket 31 and the two rollers 23 detached from the prismatic body 21.

Moreover, each of the two vertical supports 30 carries two vertical guide columns 33 for a slide 34 which has a centring pin 35 of the free lower end 12a of the glass tube 12.

The slide 34 via a pin 36 is connected to a jointed lever mechanism which controls phased raising and lowering of the centring pin. The lever mechanism comprises a rod 37 of adjustable length hinged in 38 to a second oscillating rod 39, hinged to the fixed structure 9 in 40. The oscillating rod 39 carries hinged in 41 a tie-rod 42 controlled by an oscillating bracket 43 operated by an underlying control unit 44.

These two units are mechanically connected via transmissions (not shown) which allow the pin to act inside the free end of the glass tube only once the bracket, which carries, free to rotate, the two support and guide rollers of the rotary supporting element, has come into contact with this rotary supporting element. It is however evident that the stable positioning elements (23, 31) of the supporting elements and the centring pins 35 for the free end 12a of the glass tubes 12 move alternatively between an engaged position and a disengaged position with the aforesaid supporting elements 17.

At this point, two further shaped rollers 45 will approach close and operate which, by acting on the end of the glass tube 12b from the outside, produce the shaped mouth of the vial. It is evident that during this operation both the two centring rollers 23 mentioned above and the pin 35 inside the mouth being formed 12b on the glass tube perform an indispensable centring and reaction role.

The presence of a pair of pins 35 guided in this way and a pair of brackets 31 with respective pairs of rollers 23 allows secure and immediate centring action on pairs of supporting elements 17 carried by the rotary plate 15 of the machine with considerable increase in precision.

The arrangement of the centring pins combined with the rollers for support and centring guarantees correct shaping of the mouth in relation to the axis of the glass tube.

Naturally, this all takes place on pairs of glass tubes carried by the principal rotary plate by pairs of shaping elements after these ends of the tubes have been treated with the heaters disposed along the fixed structure of the machine.

Subsequently, cutting and definition of the bottom of the vial take place in other stations.

A device of this type is optimally positioned in a machine for forming glass vials or containers and is placed at one or more of the shaping stations provided on the machine.

With a device of this type according to the invention, correct and axially aligned continuous forming of the mouth of glass vials or similar containers of the same size is attained, with considerable increase in precision.

This makes it possible to obtain vials with high dimensional precision, also with high production speeds.

Moreover, with a device according to the invention the mouths produced all have the same dimension and form, all identical and corresponding perfectly to one another.

Yet another advantage is the fact that a mouth is obtained for a container with a small diameter, such as a vial or the like, which is perfectly centred in relation to its axis thanks to the certainty of always being positioned identically in relation to the tools which produce the mouth.

## Claims

1. Machine for the continuous forming of glass vials or containers provided with a stepped moving rotary carousel (14, 15) comprising a plurality of supporting elements (17) equipped with a gripping element (18) for glass tubes (12) passing through them, the machine further comprising a centering device for a semi-finished glass vial being integral to at least one fixed upright (19) **characterized in that** the centering device has least one stable positioning element (23, 31) of at least one supporting element (17) and a centering pin (35) for a free end (12a) of said glass tube (12), said at least one stable positioning element (23, 31) and said centering pin (35) being mechanically interconnected to move between an engaged position and a disengaged position with the at least one supporting element (17).

2. Machine as claimed in claim 1 **characterized in that** said at least one stable positioning element of at least one supporting element (17) comprises a bracket (31) which carries a pair of rollers (23) at its opposite ends facing said supporting element (17).

3. Machine as claimed in claim 1 or 2 **characterized in that** said stable positioning element is movable between said two positions via a cam control (24, 25) being provided with elastic elements (32) which maintain, in a position at rest, said stable positioning element in contact with said supporting element (17).

4. Machine as claimed in claim 1 or 2 **characterized in that** a slide (34) which carries said centering pin (35) is guided slidingly on said stable positioning element.

5. Machine as claimed in claim 4 **characterized in that** said centering pin (35) is controlled during sliding in relation to said stable positioning element via jointed lever mechanism (36-43) controlled (in 44).

6. Machine as claimed in claim 3 **characterized in that** said stable positioning element is disposed in a vertical support (30) movable via rods (22) sliding inside holes of a prismatic body (21) which is positioned integral to the fixed upright (19).

7. Machine as claimed in claim 1 or 2 **characterized in that** said stable positioning elements which act simultaneously on successive pairs of supporting elements (17) are two, just as the centering pins (35) are two, with a single cam control (24,25) provided for movement between said engaged position and said disengaged position with said two supporting elements (17).

## Patentansprüche

1. Maschine für die kontinuierliche Formung von Glasfläschchen oder -behältern, die mit einem sich gestuft bewegenden, rotierenden Karussell (14, 15) versehen ist, das eine Vielzahl von Trägerelementen (17) umfasst, die mit einem Greifelement (18) für Glasrohre (12), die durch diese verlaufen, ausgestattet sind, wobei die Maschine ferner eine Zentriervorrichtung für ein halb fertig gestelltes Glasfläschchen umfasst, die einteilig an zumindest einem fixierten Ständer (19) ausgebildet ist,
**dadurch gekennzeichnet, dass**
die Zentriervorrichtung zumindest ein Element (23, 31) für stabile Positionierung von zumindest einem Trägerelement (17) und einen Zentrierstift (35) für ein freies Ende (12a) des Glasrohres (12) aufweist, wobei das zumindest eine Element (23, 31) für stabile Positionierung und der Zentrierstift (35) mechanisch miteinander verbunden sind, um sich zwischen einer eingerückten Position und einer ausgerückten Position mit dem zumindest einen Trägerelement (17) zu bewegen.

2. Maschine nach Anspruch 1,
**dadurch gekennzeichnet, dass**
das zumindest eine Element für stabile Positionierung von zumindest einem Trägerelement (17) eine Halterung (31) umfasst, die ein Paar von Walzen (23) an ihren entgegengesetzten Enden trägt, die zu dem Trägerelement (17) weisen.

3. Maschine nach einem der Ansprüche 1 oder 2,
**dadurch gekennzeichnet, dass**
das Element für stabile Positionierung zwischen den zwei Positionen über eine Nockensteuerung (24, 25) bewegbar ist, die mit elastischen Elementen (32) versehen ist, die in einer Ruheposition das Element für stabile Positionierung in Kontakt mit dem Trägerelement (17) beibehalten.

4. Maschine nach einem der Ansprüche 1 oder 2,
**dadurch gekennzeichnet, dass**
ein Schlitten (34), der den Zentrierstift (35) trägt, verschiebbar an dem Element für stabile Positionierung geführt ist.

5. Maschine nach Anspruch 4,
**dadurch gekennzeichnet, dass**
der Zentrierstift (35) während dem Verschieben in Bezug auf das Element für stabile Positionierung über einen Gelenkhebelmechanismus (36 - 43), der (in 44) gesteuert ist, gesteuert ist.

6. Maschine nach Anspruch 3,
**dadurch gekennzeichnet, dass**
das Element für stabile Positionierung in einem vertikalen Träger (30) angeordnet ist, der über Stangen (22) bewegbar ist, die in Löchern eines prismatischen Körpers (21) gleiten, der einteilig an dem fixierten Ständer (19) positioniert ist.

7. Maschine nach einem der Ansprüche 1 oder 2,
**dadurch gekennzeichnet, dass**
die Elemente für stabile Positionierung, die gleichzeitig an aufeinanderfolgenden Paaren von Trägerelementen (17) wirken, zwei sind, ebenso wie die Zentrierstifte (35) zwei sind, wobei eine Einzelnockensteuerung (24, 25) zur Bewegung zwischen der eingerückten Position und der ausgerückten Position mit den beiden Trägerelementen (17) vorgesehen ist.

## Revendications

1. Machine pour la formation continue de flacons ou récipients en verre, dotée d'un carrousel rotatif mobile à étages (14, 15) comprenant une pluralité d'éléments de support (17) équipés d'un élément de prise (18) pour les tubes en verre (12) passant à travers eux, la machine comprenant en outre un dispositif de centrage pour un flacon en verre semi-fini, d'un seul tenant avec au moins un montant fixe (19), **caractérisée en ce que** le dispositif de centrage a au moins un élément de positionnement stable (23, 31) d'au moins un élément de support (17) et une broche de centrage (35) pour une extrémité libre (12a) dudit tube en verre (12), ledit au moins un élément de positionnement stable (23, 31) et ladite broche de centrage (35) étant mécaniquement interconnectés, pour se déplacer entre une position en prise et une position libérée avec ledit au moins un élément de support (17).

2. Machine selon la revendication 1, **caractérisée en ce que** ledit au moins un élément de positionnement stable d'au moins un élément de support (17) comprend une console (31) qui supporte une paire de rouleaux (23) à ses extrémités opposées face audit élément de support (17).

3. Machine selon la revendication 1 ou 2, **caractérisée en ce que** ledit élément de positionnement stable est mobile entre lesdites deux positions, grâce à une commande à came (24, 25), dotée d'éléments élastiques (32) qui maintiennent, dans une position au repos, ledit élément de positionnement stable en contact avec ledit élément de support (17).

4. Machine selon la revendication 1 ou 2, **caractérisée en ce qu'**une coulisse (34) qui transporte ladite broche de centrage (35) est guidée de manière coulissante sur ledit élément de positionnement stable.

5. Machine selon la revendication 4, **caractérisée en ce que** ladite broche de centrage (35) est commandée pendant le coulissement relativement audit élément de positionnement stable, par le biais d'un mécanisme à levier raccordé (36-43) contrôlé (en 44).

6. Machine selon la revendication 3, **caractérisée en ce que** ledit élément de positionnement stable est disposé dans un support vertical (30) mobile, par le biais de tiges (22) coulissant à l'intérieur d'orifices d'un corps prismatique (21) qui est positionné d'un seul tenant avec le montant fixe (19).

7. Machine selon la revendication 1 ou 2, **caractérisée en ce que** lesdits éléments de positionnement stables qui agissent simultanément sur des paires successives d'éléments de support (17) sont au nombre de deux, de même que les broches de centrage (35) sont au nombre de deux, avec une commande à came unique (24, 25) fournie pour permettre un mouvement entre ladite position en prise et ladite position libérée avec lesdits deux éléments de support (17).
